(19) Europäisches Patentamt / European Patent Office / Office européen des brevets

(11) **EP 4 317 989 A1**

(12) **EUROPEAN PATENT APPLICATION**

(43) Date of publication:
07.02.2024 Bulletin 2024/06

(21) Application number: 22188252.5

(22) Date of filing: 02.08.2022

(51) International Patent Classification (IPC):
*G01N 35/10* (2006.01)

(52) Cooperative Patent Classification (CPC):
**G01N 35/1016**; G01N 2035/1025; G01N 2035/1027

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beckman Coulter, Inc.**
**Brea, CA 92821 (US)**

(72) Inventors:
• **Schulmayr, Günter Andreas**
**85635 Höhenkirchen-Siegertsbrunn (DE)**
• **Lkandushi, Amin**
**80809 München (DE)**

(74) Representative: **Müller-Boré & Partner**
**Patentanwälte PartG mbB**
**Friedenheimer Brücke 21**
**80639 München (DE)**

(54) **CAPACITIVE DETECTION DEVICE AND METHODS**

(57) Summarising the invention, a device is provided. The device comprises a dispensing component configured to draw and dispense liquid, wherein the dispensing component is movable with respect to a liquid sample; and a capacitive sensing component coupled to the dispensing component and configured to detect a plurality of operational states of the dispensing component, wherein each operational state of the plurality of operational states corresponds to a respective capacitance value of a plurality of capacitance values; wherein: the capacitive sensing component has a capacitive sensing range, wherein the capacitive sensing range is a predefined working range for the capacitive sensing component; and the capacitance of at least part of the device is adapted to the capacitive sensing range such that each capacitance value of the plurality of capacitance values is within the capacitive sensing range.

Figure 1

**Description**

Technical Field

The following description relates to a device and methods for detecting operational states of a dispensing component configured to draw and dispense liquid.

Background

In the context of processing of biological samples for analysis, liquid aspiration and liquid dispensation are common steps, wherein the liquid may be the biological sample itself and/or e.g. a reagent. These steps are carried out by a dispensing component (such as a pipettor with pipette tip) configured to draw and dispense liquid.

Nowadays sample processing, and, thus, liquid aspiration/dispensation is performed automatically. Accordingly, a detection of the liquid level is needed to guide the movement of the dispensing component towards and away from the liquid. Conventionally, this detection is carried out by a capacitive sensing component that uses capacitance as an indication of whether a tip of the dispensing component is outside of or within the liquid.

In particular, only binary information is provided about the state of the dispensing component, i.e. in the air or in the liquid. In addition to the coarseness of the detection, another negative side of the conventional capacitive sensing is its susceptibility to errors because it ignores other factors that may affect the value of the capacitance.

Summary

It is an object of the invention to provide a reliable and accurate capacitive sensing for liquid aspiration/dispensation.

The achievement of this object in accordance with the invention is set out in the independent claims. Further developments of the invention are the subject matter of the dependent claims.

According to one aspect, a device is provided. The device comprises:

a dispensing component configured to draw and dispense liquid, wherein the dispensing component is movable with respect to a liquid sample; and
a capacitive sensing component coupled to the dispensing component and configured to detect a plurality of operational states of the dispensing component, wherein each operational state of the plurality of operational states corresponds to a respective capacitance value of a plurality of capacitance values;
wherein:

the capacitive sensing component has a capacitive sensing range, wherein the capacitive sensing range is a predefined working range for the capacitive sensing component; and
the capacitance of at least part of the device is adapted to the capacitive sensing range such that each capacitance value of the plurality of capacitance values is within the capacitive sensing range.

The dispensing component is capable of drawing liquid, i.e. transferring a volume of liquid from the exterior of the dispensing component to the interior of the dispensing component, as well as of dispensing liquid, i.e. transferring a volume of liquid from the interior of the dispensing component to the exterior of the dispensing component. In the following, the expression "transferring liquid" used in connection with the dispensing component will denote both "drawing liquid" and "dispensing liquid".

Accordingly, the dispensing component is also capable of holding the volume liquid, e.g. after having drawn it or before dispensing it. The dispensing component may have a given maximum capacity, i.e. it may hold liquid up to a given volume. In some examples, the volume of liquid that can be drawn by the dispensing component may be variably set from a range of volumes predefined for the given dispensing component, e.g. for a specific model of a specific manufacturer. Thus, the volume to be drawn may be modified within the constraints of the dispensing component.

In particular, the dispensing component may be configured to transfer liquid to/from a liquid sample, which is e.g. held in a liquid sample container (or "sample container"), such as a tube. In other words, the dispensing component may transfer a sub-volume of liquid to/from the liquid sample, wherein the sub-volume may be a fraction of the total volume of the liquid sample. Exemplarily, the liquid sample may be a sample contained in a sample container handled by an automated laboratory system (ALS). The liquid sample may comprise a biological specimen (e.g. blood, urine) and/or a reagent and/or any other type of liquid used in the context of sample analysis.

The dispensing component is movable with respect to the liquid sample, and, thus, it may be movable with respect to the sample container containing the liquid sample. For example, the dispensing component may move towards the liquid sample before transferring the liquid and may move away from the liquid sample after the liquid transfer.

The device may comprise moving means to move the dispensing component. The movement of the dispensing component may occur along at least one axis, e.g. a vertical axis, wherein a vertical axis is parallel to the direction of the Earth's gravitational pull. For instance, the moving means may move the dispensing component downwards to come into contact with the liquid sample and may move the dispensing component upwards to remove it from the liquid sample. In some examples, the movement of the dispensing component may be a translation along one axis, such as the vertical axis. In other examples, the movement may be a composite of translations along two or three axes (e.g. the x, y and z axes of a Cartesian coordinate system). Optionally, the movement may include rotations along one, two or three axes. The moving means of the device may comprise a robotic arm having one or more degrees of freedom.

Exemplarily, the dispensing component may comprise a pipettor and a pipette tip, and the liquid may be held in the pipette tip. At least part of the dispensing component may be made of conductive material, e.g. the pipettor may be made at least partially of conductive material, e.g. metal or conductive polymer. Furthermore, the pipette tip may be conductive, e.g. made of conductive polymer. Accordingly, the dispensing component may be conductive, in particular it may comprise a conductive pipettor and a conductive pipette tip. The pipettor may be configured to hold the pipette tip, wherein the pipette tip may be releasably mounted to the pipettor. The pipettor may be configured to perform the act of liquid transfer, e.g. it may comprise mechanical elements for aspirating/releasing the liquid. The pipettor may further comprise a volume setter, by means of which a drawing volume may be set.

The capacitive sensing component is a sensor configured to detect a plurality of operational states of the dispensing component. In particular, the capacitive sensing component as a sensor uses the physical quantity capacitance as a "proxy variable" for the operational state of the dispensing component.

The capacitance values are numerical values quantifying the capacitance. In one example, the capacitance measured by the capacitive sensing component may be the mutual capacitance between the dispensing component (in particular a conductive pipettor) and a conductive element located below the liquid sample, in particular below the sample container, which may be referred to as "lower conductive element". The lower conductive element may or may not be grounded.

In another example, e.g. if the dispensing component is not conductive, an electrical conductor may be affixed to the dispensing component and the capacitance may be the mutual capacitance between the electrical conductor and the lower conductive element. Alternatively, two electrical conductor may be affixed to the dispensing component and the capacitance may be the mutual capacitance between the two electrical conductors. The one or two electrical conductors may be affixed to the dispensing component such that the capacitance values measured by the capacitive sensing component identify corresponding operational states of the dispensing component. For instance, the electrical conductor(s) and the dispensing component may form a substantially rigid body, so that e.g. a movement of the dispensing component entails the same movement of the electrical conductor.

In any case, the device comprises a sensitive element whose capacitance (with respect to the lower conductive element) varies when the operational states of the dispensing component change, wherein the sensitive element may be the dispensing component itself (in particular the pipettor) or an electrical conductor attached to the dispensing component.

The capacitive sensing component may measure the capacitance of the sensitive element by applying an excitation voltage to it. Accordingly, the capacitive sensing component may be electrically coupled to the sensitive element, in particular to the dispensing component. Furthermore, in some examples, the capacitive sensing component may be electrically coupled to the lower conductive element.

Exemplarily, the capacitive sensing component may comprise a measuring element configured to measure the capacitance of the sensitive element and a processing element configured to identify the plurality of operational states using one or more capacitance values. The sensitive element may be electrically connected to the measuring element (e.g. by means of one or more electrical cables) and the measuring element may be in data communication (e.g. by means of a bus) with the processing element. The measuring element may comprise an analog-to-digital converter - ADC (in particular a capacitanceto-digital converter - CDC) and an excitation signal source, and the processing element may comprise a computing device including a processor and a memory.

An operational state of the dispensing component indicates a condition in which the dispensing component may find itself while operating with the aim of transferring liquid, wherein this condition is determined by a factor intrinsic or extrinsic to the dispensing component.

A factor intrinsic to the dispensing component may be a feature of the dispensing component. For instance, a feature of the dispensing component may be the pipette tip, in particular the absence of the pipette tip (e.g. in case of an error), the presence of an incorrectly mounted pipette tip (e.g. in case of an error) and the presence of a correctly mounted pipette tip. Another exemplary feature of the dispensing component may be its movement speed.

A factor extrinsic to the dispensing component may be a feature of the environment of dispensing component, i.e. of the physical space in which the dispensing component is contained. The features of the environment of the dispensing component may include environmental parameters (e.g. temperature, humidity), the presence of one or more other entities within a predetermined range from the dispensing component, the distance between the other entity/entities and the dispensing component and/or the characteristics of the other entity/entities.

The environment may include entities comprised in the device and entities that do not belong to the device. For instance, an entity that is not part of the device may be the liquid sample or the sample container containing the liquid sample, while an entity that is part of the device may be a holding tool for holding the sample container (such as a clamp), a cover for a barcode reader of the device or a door of the device, wherein the door is a panel that can be open or close and that is configured to cover/enclose a portion of the device.

Each of the features of the dispensing component itself and the features of the environment around the dispensing component may be considered as characterising one operational state of the dispensing component. In other words, the status of one factor may define one operational state of the dispensing component, wherein the status may be a quality (e.g. door closed or tip absent) or a value (e.g. a distance value or a temperature value). Since the status of a factor defining an operational state spans a range of possibilities and since there is a plurality of factors, the dispensing component has a plurality of operational states.

For example, an operational state may be a positional state, i.e. referring to a specific position of the dispensing component relative to another entity (e.g. the dispensing component is in contact with the liquid sample), or a configuration state, i.e. referring to a specific configuration of the dispensing component (e.g. the dispensing component has the pipette tip mounted incorrectly).

The capacitance of the sensitive element is influenced by the plurality of factors determining the plurality of operational states. Correspondingly, each operational state is characterized by at least one corresponding capacitance value. Accordingly, each operational state of the plurality of operational states may correspond to at least one respective capacitance value of a plurality of capacitance values. Said otherwise, each operational state of the plurality of operational states may correspond to a respective set of capacitance values of a plurality of sets of capacitance values. Generally, a set may comprise one or more elements.

The capacitive sensing component (in particular the processing element) is configured such that a particular operational state can be associated to at least one capacitance value. In some cases, an operational state may correspond to one capacitance value, meaning that the capacitive sensing component may detect the operational state on the basis of one capacitance value. In other cases, an operational state may correspond to a series of capacitance values, i.e. to more than one capacitance value, meaning that the capacitive sensing component may detect the operational state on the basis of the series of capacitance values.

Each capacitance value of the series of capacitance values may be measured by varying the status of the factor defining the operational state in question. For instance, an operational state in which the dispensing component comes into contact with the liquid sample (e.g. crosses the meniscus) may be detected via a step detection, namely by identifying an abrupt change in the capacitance.

In examples like the meniscus crossing, the detection of the operational state may be achieved based on the measured capacitance values alone. Said otherwise, the detection may derive from inherent features of the series of capacitance values, in particular their relation to each other. In other examples, the detection may be achieved by evaluating the measured capacitance value(s) against one or more sets of calibration data.

A set of calibration data may comprise one or more capacitance values. Exemplarily, the calibration of the capacitive sensing component may comprise systematically measuring a plurality of capacitance values under different, known conditions. In other words, the factors determining the operational states may be varied to cover the range of operations of the device. Accordingly, a plurality of sets of calibration data may be generated, wherein each set of calibration data is associated with specific statuses of the factors. For instance, the plurality of sets of calibration data may be stored in the memory of the processing element.

Exemplarily, each set of calibration data may comprise a plurality of value pairs, each value pair comprising a first value indicating a position of the dispensing component along a vertical axis and a second value indicating the respective capacitance. The plurality of value pairs may be referred to as "calibration curve". A calibration curve may be created for each combination of factors' statutes that is relevant for the operation of the device.

It should be noted that the plurality of factors determining the operational states, or at least a subset of the factors, generally coexist, meaning that the dispensing component is generally in a superposition of operational states. For instance, the dispensing component may not have a tip, be within a certain distance from the liquid sample and be within an environment with a certain humidity. Accordingly, a set of calibration data may be also generally associated with a superposition of operational states, namely to specific statuses of the plurality of factors (or a subset thereof).

The evaluation of the measured capacitance value(s) against one or more sets of calibration data may be used for "disentangling" a given superimposed operational state from the other superimposed operational states. Exemplarily, there may be one superimposed operational state that is unknown, while the other superimposed operational state(s) may be known (e.g. may be directly observed by a user or detected by another instrument - e.g. the humidity of the environment may be measured by a hygrometer, the present of the pipette tip may be detected by an optical sensor). The unknown superimposed operational state may be the one detected by the capacitive sensing component. Accordingly, the particular operational state may be identified out of a superposition of operational states.

Thus, in a particular example, the capacitive sensing component may be configured to receive one or more inputs and to detect (each operational state of) the plurality of operational states further based on the one or more inputs. The one or more inputs may be received from a computing device, e.g. of a laboratory automation system, and/or from a user.

Exemplarily, each input may indicate the status of a factor, e.g. absent tip or a humidity value. Thus, the one or more inputs may specify one or more known superimposed operational states (i.e. the ones which are not the object of the detection).

The one or more inputs may identify at least two sets of calibration data and the capacitive sensing component (in particular the processing element) may access the at least two sets of calibration data. The at least two sets of calibration data may be associated, respectively, with at least two candidate operational states for the unknown operational state. In particular, the candidate operational states may be defined by respective different statutes of the same factor.

The capacitive sensing component (in particular the processing element) may detect the actual operational state by comparing the at least one measured capacitance value with the at least two sets of calibration data and determining that the given operational state is the candidate operational state associated with the set of calibration data that comprises the at least one measured capacitance value. If the sets of calibration data are calibration curves, in some examples the one or more inputs may comprise at least one value for a position along the vertical axis, i.e. indicate the status of the position factor. In this case, the capacitive sensing component may determine that the given operational state is the candidate operational state associated with the set of calibration data that comprises the at least one measured capacitance value associated with the at least one value for the position along the vertical axis.

In an illustrative example, the capacitive sensing component may measure a capacitance value $C_1$. It is not known whether the pipette tip is correctly mounted on the dispensing component, while the statuses of all other factors (e.g. including the position $z_A$ along the vertical axis, the temperature) are known. There may exist three calibration curves corresponding to three different statuses of the factor "pipette tip", namely "pipette tip absent", "pipette tip incorrectly mounted" and "pipette tip correctly mounted". The capacitive sensing component may check the capacitance values for the position $z_A$ in the three calibration curves. The operational state associated with the calibration curve comprising the pair ($z_A$, $C_1$) is the operational state of the dispensing component.

In a particular example, the plurality of operational states may comprise a plurality of positional operational states, namely a plurality of positions of the dispensing component.

Since the dispensing component is an extended object, the position of the dispensing component may exemplarily be the position of the lower extremity of the dispensing component, i.e. of the portion of the dispensing component that is configured to (first) come into contact with the liquid sample when transferring liquid. For instance, the lower extremity may be the head of the pipette tip.

Specifically, the plurality of positions may be along a vertical axis relative to the meniscus of the liquid sample, i.e. to the interface liquid/air. The vertical axis may be perpendicular to the meniscus. As discussed above, the dispensing component may be moved only along the vertical axis or may be moved with more degrees of freedom. In any case, the position along the vertical axis can be obtained by projecting the dispensing component (e.g. its lower extremity) onto the vertical axis.

The plurality of positions may include a first position in which the distance between the dispensing component and the meniscus is greater than a threshold, wherein the threshold is between about 1 mm and about 7 mm, and a second position in which the dispensing component is in contact with the liquid sample. In particular, at the second position, the dispensing component (e.g. the pipette tip) may be at the meniscus or below the meniscus. In other words, the dispensing component may be crossing the meniscus.

The threshold may be more particularly between about 1 mm and about 5 mm, yet more particularly between about 1 mm and about 3 mm.

The position of the meniscus on the vertical axis may be taken as origin, so that points above the origin have a positive coordinate and points below the origin have a negative coordinate. Correspondingly, a distance may be a positive distance or a negative distance. At the second position, the dispensing component may have a substantially null distance relative to the meniscus (e.g. positive distance less than $10^{-8}$ mm, or more particularly less than $10^{-10}$ mm, or yet more particularly equal to or less then $10^{-12}$ mm) or negative distance relative to the meniscus. The absolute value of this negative distance may be less than about 1 mm, or more particularly less than about 0.5 mm, or yet more particularly less than about 0.1 mm.

The capability of detecting the first position and the second position improves the automatic transfer of the liquid. Exemplarily, the capacitive sensing component may be configured to transmit the detected positions to a controller of the moving means, which, in turn, may regulate the movement accordingly. For instance, when the dispensing component is at the first position, the speed may be reduced, since the dispensing component is approaching the liquid sample. When the dispensing component is at the second position, the movement may be stopped, since the liquid sample has been reached.

Optionally the plurality of positions may further include a third position in which the distance between the dispensing component and the meniscus is greater than about 0 mm and less than the threshold. At the third position, the speed may be further reduced.

In other examples, the plurality of operational states may alternatively or additionally comprise one or more of the following:

- an open-clamp state in which the dispensing component transfers liquid to/from a liquid sample in a container not held by a clamp (i.e. a case in which the clamp is not properly closed);
- a closed-clamp state in which the dispensing component transfers liquid to/from a liquid sample in a container held by a clamp;
- a tube-position state in which the dispensing component is within a predetermined distance from a sample container containing a liquid sample (e.g. from the container rim);
- a tube-present state in which a sample container containing a liquid sample is detected in the environment of the dispensing component (e.g. within a predetermined radius);
- a no-tube state in which no sample container containing a liquid sample is detected in the environment of the dispensing component (e.g. within a predetermined radius);
- a correct-tip state in which the pipette tip is correctly mounted in the dispensing component;
- an incorrect-tip state in which the pipette tip is incorrectly mounted in the dispensing component (e.g. obliquely mounted);
- a no-tip state in which no pipette is mounted in the dispensing component (i.e. on the pipettor);
- a plurality of open states for a respective plurality of elements including the door of the device, the cover of the barcode reader, an anti-splash protection cover, wherein in each open state the given element is detected as open (or absent) in the environment of the dispensing component;
- a plurality of closed states for a respective plurality of elements including the door of the device, the cover of the barcode reader, an anti-splash protection cover, wherein in each closed state the given element is detected as closed in the environment of the dispensing component;
- a tube-labelling-mechanism present state, in which a component configured to transfer a tube label on the tube is detected in the environment of the dispensing component (e.g. within a predetermined radius);
- a double-bottom tube state in which a tube with a double-bottom is detected in the environment of the dispensing component (e.g. within a predetermined radius);
- a room-temperature state in which the liquid sample is at room temperature, wherein the room temperature may correspond to the temperature of the environment and may be e.g. between 15 °C and 25 °C;
- a refrigeration-temperature state in which the liquid sample is at a refrigeration temperature, e.g. between 0 °C and 4 °C.

The tube-position state, the tube-present state and the no-tube state may also be detected in case of an empty tube when the tube is conductive.

Generally, by measuring absolute capacitance values, it is possible to use the capacitive sensing component to detect a variety of operational states, beyond the binary information of the dispensing component being in air or in liquid. In particular, the detection of any of the above states may be used to ensure that no errors occur during operations of the device.

A clamp that is not properly closed may not hold the sample container fast, which may hinder the operation of the dispensing component and/or cause loss or contamination of the liquid sample (e.g. the sample container may tip over). The absence or incorrect mounting of the pipette tip may prevent the dispensing component from transferring liquid. The presence of open elements such as covers may compromise the safety of operations and e.g. lead to cross-contamination. The presence of a tube with a double-bottom may confirm that the correct sample/sample container is being processed or indicate that a wrong one is being processed, depending on an expected type of tube bottom. The detection of a liquid sample at room temperature may indicate that the liquid sample has not been correctly preserved (e.g. faulty refrigeration equipment or incorrect handling of the sample container) and e.g. may have to be discarded. The absence of the component configured to label the tube within a predetermined radius may indicate a mistake in the operations.

The capacitive sensing component (in particular the measuring element) has a capacitive sensing range, i.e. a numerical range of capacitance values that the capacitive sensing component can correctly measure. In other words, the capacitive sensing range is a working range, in that the capacitive sensing component correctly works only within this range, namely it can accurately measure only capacitance values that fall within the capacitive sensing range. If the capacitive sensing range is $[C_a, C_b]$ and the capacitance is such that its measured value $C_m$ is within the range, $C_m \in [C_a, C_b]$, the capacitive sensing component will output $Cm$ as the measured value. However, if $C_m < C_a$ or $C_m > C_b$, the

measured value saturates to $C_a$ or $C_b$, respectively, i.e. the capacitive sensing component outputs a misrepresenting capacitance value.

The capacitive sensing range is a predefined range, which is predetermined for a given capacitive sensing component based on its manufacturing. Accordingly, the capacitive sensing range is set by the manufacturer of the capacitive sensing component (in particular of the measuring element) and it is fixed.

Generally, any measured capacitance value $C_m$ is not identical to the "true" value $Ctrue$ of the capacitance of a given object. Specifically, the capacitance values measured by the capacitive sensing component (in particular by the measuring element) do not correspond to the true values of its capacitance. The capacitive sensing component may introduce a systematic error such as an offset error E, so that a measured capacitance value $C_m = Ctrue + E$.

More particularly, since the sensitive element is comprised in the device, the capacitance as measured by the capacitive sensing component always includes a component due to the parasitic capacitance of the device as a whole. Thus, each capacitance value may be seen as composed of a state-dependent capacitance value and a parasitic capacitance value, in particular, as the sum of the state-dependent capacitance value and the parasitic capacitance value. The parasitic capacitance value is a value that is fixed for a given device, in particular for given materials and structure of the device. The parasitic capacitance value is comprised in the systematic error of the capacitive sensing component. The state-dependent capacitance value depends on the operational state of the dispensing component and varies if a factor is modified.

The capacitance of at least part of the device is adapted to the capacitive sensing range such that each capacitance value of the plurality of capacitance values is within the capacitive sensing range. In other words, the device is adapted to the specifics of its capacitive sensing component, such that it is possible to detect, using the capacitive sensing component, the plurality of operational states of the dispensing component. The adaptation occurs in the assembly and/or manufacturing phase of the device, prior to its utilisation for the automatic transfer of liquid and also prior to the calibration. Further refinements of the device may be optionally carried out on an already assembled device.

Thanks to the adaptation, it is ensured that the capacitance values corresponding to the different operational states can be discerned, in particular that there is no saturation in the measuring of the capacitance by the capacitive sensing component. Accordingly, a reliable capacitive sensing is provided.

In particular, the capacitance of at least part of the device may be adapted to the capacitive sensing range in that the systematic error (e.g. the parasitic capacitance value) is adapted. Accordingly, the existence of the systematic error may be exploited to bring the capacitance values within the desired range. For a given operational state, the capacitance $C^{NA}$ measured by a capacitive sensing component of a device without any part adapted to the capacitive sensing range is $C^{NA} = C_{true} + E^{NA}$, and it may be that $C^{NA} \notin [C_a, C_b]$. Instead, the capacitance $C^A$ measured by the capacitive sensing component of that same device but having at least a part adapted to the capacitive sensing range becomes $C^A = C_{true} + E^A$, and $C^A \in [C_a, C_b]$.

Exemplarily, the adaptation may involve calculating or measuring the capacitance of the sensitive element in a first state in which this capacitance is maximised, thereby obtaining a maximum capacitance value, and in a second state in which this capacitance is minimised, thereby obtaining a minimum capacitance value. The device may then be adapted such that the maximum capacitance value is equal to or less than the upper limit of the capacitive sensing range, $C_b$, while ensuring that the minimum capacitance value stays above the lower limit of the capacitive sensing range, $C_a$. The first state may be a state in which all contributions that increase the parasitic capacitance value are considered, e.g. by having all the elements that contribute to the parasitic capacitance value present (e.g. mounted or modelled) in the device and/or in the configuration that maximises the capacitance value (e.g. dispensing component inside the liquid). The second state may be a state in which all positive contributions to the parasitic capacitance value are removed or minimised.

In some examples, since the focus is on modifying the parasitic capacitance value of the device, the adaptation may involve calculating or measuring just the parasitic capacitance value instead of the overall capacitance of the sensitive element. The same considerations about the first state and the second state apply *mutatis mutandis.*

Exemplarily, the capacitance may be adapted to the capacitive sensing range such that each capacitance value of the plurality of capacitance values is within a sub-range of the capacitive sensing range. For instance, the sub-range may have the same middle value as the capacitive sensing range and a width $W = C_b - C_a$ that is 5% smaller, or 10% smaller, or 20% smaller. In another instance, the sub-range may be $[C_a, C_s]$, with $C_s = C_b\text{-}0.1W$, or $C_s = C_b\text{-}0.3W$, or $C_s = C_b\text{-}0.5W$.

The device, together with the liquid sample and the sample container, may be considered as forming an electrical circuit, with the different constituents representing passive elements such as resistors and capacitors, with the exception of the excitation voltage source (e.g. of the measuring element), which is an active element. The "at least part of the device" whose capacitance is adapted refers to at least one constituent of the device that is connected to the other constituents such as to be part of the electrical circuit.

The capacitance of the at least part of the device affects the capacitance of the device as a whole, in particular the parasitic capacitance value. Accordingly, the expression "the capacitance of at least part of the device is adapted to the capacitive sensing range" is meant to indicate that there is a purposeful tuning of the capacitance of the at least part of the device based on the capacitive sensing range, which translates in an overall tuning of the capacitance of the device.

The at least part of the device whose capacitance is adapted to the capacitive sensing range may also be referred to as "adapting component", although it may include a plurality of components. The adapting component may be a component that is included in the device for the sole reason of tailoring the device to the operation of its capacitive sensing component, namely without any other function. Alternatively, the adapting component may be a component that fulfils one or more roles in the device and whose capacitance is then adapted to the capacitive sensing range.

The adaptation of the capacitance may be achieved by designing (e.g. via a simulation) the adapting component e.g. in terms of any one or more of the following: material(s), shape, electrical characteristics, internal structure. Further details about the adaptation as a process are discussed below.

More generally, not only the capacitance, but the overall complex impedance of the device may be adapted, namely a combination of resistance, capacitance and inductance. In some cases, resistance and capacitance may be adapted, while the inductance may not be adapted.

In a particular example, the adapting component may be (at least a part of) a connecting component. Specifically, the device may further comprise: a frame at a reference potential and a connecting component mechanically coupling the dispensing component to the frame, wherein the connecting component comprises a body. The at least part of the device with capacitance adapted to the capacitive sensing range may comprise or consist of (at least a part of) the connecting component.

The frame may be a structure supporting the dispensing component and may movably link the connecting component and the dispensing component to a housing of the device, in particular via the moving means of the device. Exemplarily, the dispensing component, the connecting component and the frame may form a rigid body and may be moved (e.g. by the moving means) as a whole with respect to the housing, in particular along the z axis, as discussed above. The frame may be made of a conductive material. Generally, the potential of the frame may be the potential of the housing of the device. Exemplarily, this reference potential may be the potential of the Earth and optionally the housing may be electrically connected to the Earth via a dedicated path. In another example, the reference potential may be different from ground potential and may be e.g. the potential of another object to which the housing is electrically connected. The lower conductive element may also be connected to the housing of the device and, thus, may be at the reference potential.

When the reference potential is the Earth potential, the capacitive sensing component may be electrically coupled only to the sensitive element, e.g. the dispensing component. When the reference potential is not the Earth potential, the capacitive sensing component may be electrically coupled to both the sensitive element and the lower conductive element.

The connecting component mechanically couples the dispensing component to the frame. A mechanical coupling between two items entails that there is a physical link therebetween, namely it is possible to trace a continuous (i.e. gapless) path between any point of the first item and any point of the second item. In this case, the path goes through the connecting component.

Generally, it may be desirable to electrically separate the conductive dispensing component (in particular pipettor) from the frame, in order to have the mutual capacitance between the dispensing component and the lower conductive element. In other words, it may be desirable not to bring the dispensing component to the reference potential. Accordingly, the dispensing component may be coupled to the frame by an insulating body. However, the insulating body may act as a dielectric between a "first plate" (the dispensing component) and a "second plate" (the frame), thereby generating a parasitic capacitance.

Considering structural/functional constraints on the device, the size of the insulating body may have to be greater than a certain threshold, which may cause a large value of the parasitic capacitance. Accordingly, the connecting component may comprise a body made of a conductive material and a first joining element coupling the body to the dispensing component, wherein the first joining element is made of a first insulating material. The size of the first joining element may be minimized in order to lower the parasitic capacitance.

In a particular example, the connecting component may comprise both the first joining element and a second joining element, wherein the first joining element couples the body to the dispensing component and the second joining element couples the body to the frame; the first joining element is made of a first insulating material; and the second joining element is made of a second insulating material. In this case, the body may be made of conductive material.

Advantageously, in this particular example, the connecting component comprises two insulators (the joining elements) linked by a conductor (the body), which is equivalent to having two capacitors in series. Thus, the value of the parasitic capacitance may be (further) lowered.

The first insulating material and the second insulating material may be the same or may be different. Examples of insulating materials that may be used are: silicone, polystyrene, ceramics, glass, polymer-materials. For instance, the first and second insulating materials may be a polymer, selected based on mechanical stability and processability as well as dielectric constant.

For instance, the composition of the first insulating material and/or of the second insulating material may be such that the capacitance of the connecting component is adapted to the capacitive sensing range. For example, the dielectric constant of the first insulating material and of the second insulating material may be between 2.3 and 2.9. Additionally or alternatively, the size of the second joining element and/or the size of the first joining element may be such that the capacitance of the connecting component is adapted to the capacitive sensing range. Additionally or alternatively, the shape of the second joining element and/or the shape of the first joining element may be such that the capacitance of the connecting component is adapted to the capacitive sensing range.

Exemplarily, the shape and/or size of the body may be such that the capacitance of the connecting component is adapted to the capacitive sensing range. For instance, the body may comprise one or more cavities, whose presence modifies the capacitance of the connecting component.

The connecting component may further comprise holes configured to receive respective screws, e.g. made of an insulating material, such as plastic screws. In some cases, the function of the screws may be of fastening the first joining element and/or the second joining element as well as of adjusting the capacitance. In other cases, the function of the screws may not be of fastening, but rather only of adjusting the capacitance.

In a first example, the body as well as the joining elements may be designed for adaptation. In a second example, only the features of the body may be tuned for the capacitance adaptation. In a third example, only the features of both joining elements or of the first joining element may be designed/modified for adaptation. These three examples may be, for instance, applicable to a case in which the device is manufactured from scratch.

In a fourth example, only the second joining element may be designed for adaptation. In other words, the at least part of the device whose capacitance is adapted to the capacitive sensing range may comprise or consist of the second joining element. Exemplarily, the second joining element may have the shape of a cuboid with approximate dimensions of 0.5 cm x 0.75 cm x 3 cm and may be made of polypropylene. The provision of the second joining element as described is a simple yet efficient way for modifying e.g. a pre-existing device so that it is matched to the operations of the capacitive sensing component, in particular a pre-existing device already comprising the body and the first joining element.

In a particular example, the device may further comprise a corrective electrical circuit comprising one or more electrical components, wherein the at least part of the device with capacitance adapted to the capacitive sensing range comprises the corrective electrical circuit. In other words, the one or more electrical components are configured such that the capacitance of the at least part of the device is adapted to the capacitive sensing range.

Thus, the adapting component may comprise or consist of the corrective electrical circuit. The capacitance of the one or more electrical components is selected based on the capacitive sensing range, i.e. such that the capacitance values relative to the operational states lie within the predefined working range of the capacitive sensing component. In particular, the overall capacitance of the corrective electrical circuit may modify the parasitic capacitance value of the device in the direction needed for the capacitance values to be in capacitive sensing range. Specifically, the corrective electrical circuit may be inserted in the device such that its overall capacitance combines in series or in parallel with the existing parasitic capacitance, namely to decrease or increase the parasitic capacitance value, respectively. Exemplarily, the corrective electrical circuit may comprise or consist of one or more capacitors.

The device described herein may be used in a method according to the following aspect. The method comprises:

moving the dispensing component towards the liquid sample;
detecting, by the capacitive sensing component, when the dispensing component crosses the meniscus of the liquid sample;
in response to detecting that the dispensing component has crossed the meniscus of the liquid sample:

drawing, by the dispensing component, an aliquot from the liquid sample; or
dispensing, by the dispensing component, an aliquot to the liquid sample; moving the dispensing component away from the liquid sample.

Exemplarily, the moving means of the device may move the dispensing component downwards along the vertical axis towards the liquid sample contained in the sample container. When the dispensing component, e.g. the pipette tip, crosses the meniscus of the liquid sample, i.e. moves from air into liquid, the capacitive sensing component detects this operational state. For instance, the capacitive sensing component may collect a series of capacitance values and identify an abrupt change in this series, and determine that, because of the abrupt change, the dispensing component has crossed the meniscus.

In response to detecting that the dispensing component has crossed the meniscus of the liquid sample, a controller of the dispensing component, which may or may not coincide with the controller of the moving means, may control the dispensing component to transfer liquid to/from the liquid sample. The dispensing component either draws an aliquot from the liquid sample or dispenses an aliquot to the liquid sample.

After the liquid transfer is completed, the moving means of the device may, for example, move the dispensing component upwards along the vertical axis away from the liquid sample contained in the sample container.

Another aspect of the present invention relates to the connecting component alone. As explained, the connecting component is configured to couple a dispensing component to a frame at a reference potential, wherein:

the dispensing component is configured to draw and dispense liquid and is coupled to a capacitive sensing component;

the capacitive sensing component is configured to detect a plurality of operational states of the dispensing component, wherein each operational state of the plurality of operational states corresponds to a respective capacitance value of a plurality of capacitance values;

the capacitive sensing component has a capacitive sensing range, wherein the capacitive sensing range is a predefined working range for the capacitive sensing component; and

the capacitance of the connecting component is adapted to the capacitive sensing range such that each capacitance value of the plurality of capacitance values is within the capacitive sensing range.

Yet another aspect of the present invention relates to a method for providing a device comprising a dispensing component configured to draw and dispense liquid, wherein the dispensing component is movable with respect to a liquid sample, and a capacitive sensing component coupled to the dispensing component and configured to detect a plurality of operational states of the dispensing component, wherein each operational state of the plurality of operational states corresponds to a respective capacitance value of a plurality of capacitance values, the method comprising:

determining a sensing range of the capacitive sensing component; and

adapting the capacitance of at least part of the device to the capacitive sensing range such that each capacitance value of the plurality of capacitance values is within the capacitive sensing range.

Determining the sensing range may comprise retrieving the sensing range from a source, e.g. from a database (manually or automatically) or from a technical documentation document (e.g. by a user). Alternatively, determining the sensing range may comprise testing the capacitive sensing component to experimentally ascertain which is the working range of the capacitive sensing component.

Adapting the capacitance may comprise adding one or more components to and/or modifying one or more components of the device. In particular, the addition and/or modification may modify the parasitic capacitance of the device in order to shift the capacitance values that the capacitive sensing component would measure without adaptation to capacitance values that the capacitive sensing component measures with the adaptation, wherein the latter values lie within the capacitive sensing range.

In the equivalent electrical circuit of the device, the parasitic capacitance may be represented by a first capacitor. Exemplarily, adapting the capacitance of at least part of the device may comprise reducing the parasitic capacitance or increasing the parasitic capacitance. In order to achieve the former, a component may be added or modified so that it represents a second capacitor in the equivalent electrical circuit that is in series with the first capacitor. In order to achieve the latter, a component may be added or modified so that it represents a second capacitor in the equivalent electrical circuit that is in parallel with the first capacitor. Exemplarily, this is achieved by having the second joining element in addition to the first joining element, as explained above.

In the following, the case of an adaptation that causes a reduction of the parasitic capacitance is discussed, however the same applies *mutatis mutandis* to the other case.

For instance, in order to reduce the parasitic capacitance by a desired corrective value $\Delta C$, the following equation may be solved for $C_2$ to obtain a value for the capacitance of the second capacitor, if the original parasitic capacitance is $C_1$:

$$\Delta C = C_1 - \frac{1}{\frac{1}{C_1} + \frac{1}{C_2}}$$

More specifically, one might consider the different, individual contributions to the measured capacitance. As mentioned above, the measured capacitance comprises a state-dependent capacitance value and a parasitic capacitance value. The state-dependent capacitance value receives contributions from all the objects between the pipettor (as sensitive element) and the lower conductive element. The parasitic capacitance value receives contributions from the all the objects between the pipettor and the frame.

In detail, the contributions to state-dependent capacitance value may be the capacitance of the gap between the pipette tip and the liquid level ($C_{gap}$), the capacitance of the liquid sample together with the sample container ($C_{tube}$) and, optionally, the capacitance of a carrier (or "puck") configured to receive the liquid sample container and e.g. move it along tracks ($C_{puck}$). The contribution to parasitic capacitance value may be the capacitance of the mounting (e.g. connecting component) to the frame ($C_{mount}$). Accordingly, the measured capacitance value for a non-adapted device may be:

$$C^{NA} = C_{mount} + \cfrac{1}{\cfrac{1}{C_{gap}} + \cfrac{1}{C_{tube}} + \cfrac{1}{C_{puck}}}$$

In order to reduce the value of $C^{NA}$ by a desired amount, e.g. to bring it into the capacitive sensing range or move it into a subinterval of the capacitive sensing range, the connecting component of the device may be modified and/or a corrective electrical circuit may be inserted such that the measured capacitance value for an adapted device may be:

$$C^{A} = C^{A}_{mount} + \cfrac{1}{\cfrac{1}{C_{gap}} + \cfrac{1}{C_{tube}} + \cfrac{1}{C_{puck}}} = \cfrac{1}{\cfrac{1}{C_{mount}} + \cfrac{1}{C_{corr}}} + \cfrac{1}{\cfrac{1}{C_{gap}} + \cfrac{1}{C_{tube}} + \cfrac{1}{C_{puck}}}$$

wherein $C_{corr}$ is the capacitance introduced by the adaptation of the device, e.g. by the insertion of the second joining element or of a capacitor. For instance, $C_{corr}$ may be the capacitance of the second joining element. The desired corrective value is then, as already mentioned above,

$$\Delta C = C^{NA} - C^{A} = C_{mount} - C^{A}_{mount} = C_{mount} - \cfrac{1}{\cfrac{1}{C_{mount}} + \cfrac{1}{C_{corr}}}$$

The above equation may be solved for $C_{corr}$ after determining $C_{mount}$ and $\Delta C$. This may done analytically and/or numerically, e.g. using a finite element method (FEM). In particular, the method may comprise measuring (or calculating) $C_{mount}$, setting $\Delta C$ (or setting $C^{A}_{mount}$, which is equivalent), determining how to achieve $\Delta C$ and implementing an adaptation of the device that realizes this achievement. A further measurement or calculation to then obtain $C^{A}$ as a check may also be carried out. Determining how to achieve $\Delta C$ may comprise explicitly or implicitly obtaining a value for $C_{corr}$, e.g. using an analytical or numerical method, respectively, as discussed below.

The desired corrective value $\Delta C$ may be determined by manufacturing constraints and by considerations about the stability/reliability of the resulting $C^{A}$. It may be noted that the following cases may arise: $C^{NA} \geq C_b$ or $C^{NA} < C_b$. In the former case, the desired corrective value $\Delta C$ may be obtained as $\Delta C = C^{NA} - C_b + \mu$, wherein $\mu$ may be about $C_b - 0.1W$, or about $C_b - 0.3W$, or about $C_b - 0.5W$. For a measured saturated value of $C^{NA}$, i.e. it being falsely equal to $C_b$, the method may comprise further iterations of the determination of the desired corrective value $\Delta C$, should $\mu$ not be sufficient. A value $C^{NA}$ strictly greater than $C_b$ can only be obtained via a simulation. In the case $C^{NA} < C_b$, the adaptation may be performed only if $C_b - C^{NA}$ is less than a predetermined threshold, such as $0.1W$ or $0.3W$, and $\Delta C$ may be equal to $\mu$.

In some examples, the step of setting $\Delta C$ may be performed strictly before the step of determining how to achieve $\Delta C$. In other examples, the steps of setting $\Delta C$ and determining how to achieve $\Delta C$ may be performed concurrently with one another, in that various options may be tried out to see the effect on $\Delta C$ and then a particular $\Delta C$ with its corresponding realization may be selected.

Exemplarily, the device may be simulated using a computer-aided design (CAD) to model the device. For instance, the software EMS by EMWorks may be used. The model of the device may comprise at least the sensitive element (e.g. the pipettor) and the part of the device whose capacitance has to be adapted, e.g. the connecting component. The model may comprise a mesh of the to-be-optimized device including knots, wherein the number and distribution of knots may depend on variability of the element (e.g. more knots in bended areas, less knots in flat areas). The mesh knots are used for calculation within the FEM method.

Two or more points of the device between which the capacitance shall be measured (virtual connection points for measuring) may be selected, the used materials may be defined (e.g. their material constants such as the dielectric constants) and then different features of the device (e.g. shape and/or materials of the components) may be modified to see their impact on the capacitance. Generally, there may be mechanical constraints, geometrical constraints and dimension constraints on the components of the device and their connections, as well as stability requirements to be fulfilled. The choice of the materials may be also important, as too significant discontinuities in the permeability of the materials may be undesired. Furthermore, if an already existing device is to be adapted (as opposed to creating an adapted device from scratch), further constraints may be given.

For example, the modelled device may comprise the connecting component, wherein the features of the body (made of conductive material) and of the first joining element may be fixed. The capacitance may be measured between the sensitive element and the body. The material and dimensions of the second joining element (which determine $C_{corr}$) may be varied to be optimized in terms of a desired $\Delta C$. Furthermore, the fastening means e.g. for connecting the second joining element to the body and/or to the frame may also be considered as a variable, since they may be conducting fastening means or insulating fastening means. In this case, $C_{corr}$ may be implicitly obtained by obtaining the optimal configuration for the second joining element.

If an analytical method is used, a rough estimate of the capacitance of the second joining element may be obtained by using the dielectric value of the second insulating material and the dimensions of the second joining element, and by modelling the second joining element as a parallel plate capacitor. In this case, a value for $C_{corr}$ may be explicitly obtained.

Once it has been determined how to achieve a desired $\Delta C$, e.g. by means of the computational model, the concrete adaptation of the device can be implemented, e.g. by adding a component or modifying an already existing one.

In a particular example, adapting the capacitance of at least part of the device to the capacitive sensing range may comprise:

coupling the dispensing component to a frame of the device, wherein the frame is at a reference potential, by means of a connecting component comprising a body;
adapting the capacitance of the connecting component to the capacitive sensing range.

Exemplarily, coupling the dispensing component to the frame may comprise mechanically joining the connecting component to the dispensing component and mechanically joining the connecting component to the frame. The discussion above relative to the connecting component applies also to the aspect of the method.

Specifically, adapting the capacitance of the connecting component to the capacitive sensing range may comprise:
providing the connecting component such that it further comprises a first joining element and a second joining element, wherein:

the first joining element couples the body to the dispensing component and the second joining element couples the body to the frame;
the first joining element is made of a first insulating material; and
the second joining element is made of a second insulating material.

Additionally or alternatively, adapting the capacitance of the connecting component to the capacitive sensing range may comprise selecting the shape of the body such that the capacitance of the connecting component is adapted to the capacitive sensing range.

In a particular example, adapting the capacitance of the connecting component to the capacitive sensing range may comprise providing the second joining element made of a (second) insulating material in the connecting component to couple a block comprising the body, the first joining element and the dispensing component to the frame.

Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.

Figure 1 shows some exemplary components of a device.

Figure 2 shows some exemplary components of a computer-modelled device.

Figure 3 shows an exemplary device in operation.

Figure 4 shows an equivalent circuit corresponding to Figure 3.

Figure 5 to 8 shows how the measured capacitance is affected by various factors.

Figure 9 shows an exemplary method for providing an adapted device.

Figure 10 shows a comparison between two capacitance curves, one for a non-adapted device and one for an adapted device.

Figure 11 shows how the measured capacitance is affected by the presence of the pipette tip.

Detailed Description

In the following, a detailed description of examples will be given with reference to the drawings. It should be understood that various modifications to the examples may be made. Unless explicitly indicated otherwise, elements of one example may be combined and used in other examples to form new examples.

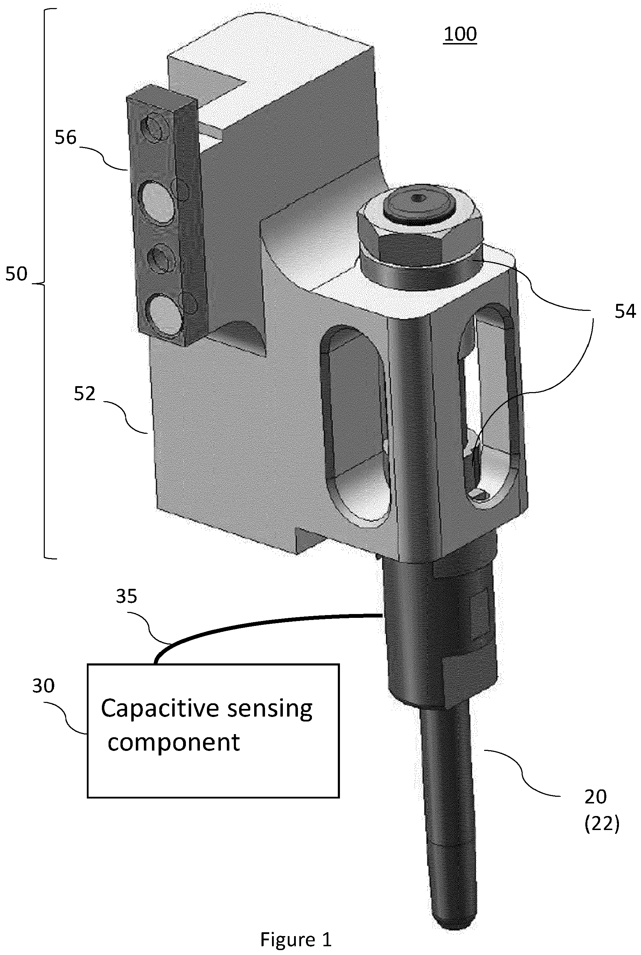

**Figure 1** shows a device 100 comprising a dispensing component 20, a capacitive sensing component 30 and a connecting component 50.

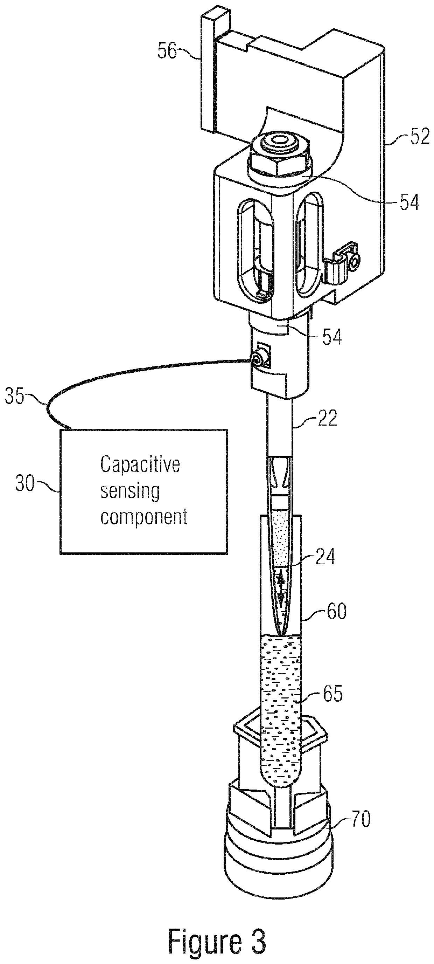

More specifically, the figure shows part of the dispensing component 20, namely the pipettor 22, to which a pipette tip 24 (see Figure 3) can be releasably mounted. The dispensing component 20 transfers liquid to/from a sample container containing a liquid sample and holds the liquid as well. The pipettor 22 has an elongated shape, in particular a substantially cylindrical shape, wherein the diameter of the cylinder may vary across the length of the pipettor 22. The pipettor is made at least partially of a conductive material. The pipettor 22 may comprises a locking portion (e.g. a recess or a protrusion) for engaging with the pipette tip 24. The pipette tip 24 has a generally conical shape and comprises a hole through which liquid can pass through. The pipette tip 24 is made of plastic or glass.

The pipettor 22 is electrically connected e.g. by means of a cable 35 to the capacitive sensing component 30. The capacitive sensing component 30 comprises a measuring element and a processing element, wherein the measuring element comprises an excitation signal source (e.g. a source of alternate voltage) and a CDC. The processing element comprises at least one memory and at least one processor, as well as software for processing and interpreting the measured capacitance values. The capacitive sensing component has a capacitive sensing range $[C_a, C_b]$, with width W. In an illustrative example, the capacitive sensing range may be 8 pF to 25 pF with $W$ equal to 17 pF.

The capacitive sensing component 30 measures the capacitance between the pipettor 22 and a lower conductive element (not shown), which may be a metallic plate at a location configured to receive the sample container, e.g. a receiving portion of the device. In one example, the capacitive sensing component 30 may be a two-electrode sensor, where the pipettor 22 is connected to the excitation signal source, and the lower conductive element is connected to the CDC input. In another example, the capacitive sensing component 30 may be a single-electrode sensor that applies the excitation signal to the pipettor 22 and also reads the capacitance from it, while the lower conductive element is grounded.

The dispensing component 20, specifically the pipettor 22, is connected to the connecting component 50. The connecting component 50 comprises a body 52, a first joining element 54 and a second joining element 56. The body 52 is made of conductive material (e.g. aluminium) and may be a generally solid structure with a cavity. The cavity may comprise a straight through-hole in at least one direction, meaning that the body 52 has at least two opposite apertures, e.g. circular apertures. These two apertures may be such that the upper part of the pipettor 22 can be inserted through them. The cavity may present other apertures on the surface of the body 52.

The body 52 and the pipettor 22 are not in direct contact with each other, rather are coupled by the first joining element 54. The first joining element 54 is made of a first insulating material (e.g. iglide® plastic bearing material) and may comprise two substantially tubular sections separate from one another, wherein each tubular section is interposed between a portion of the pipettor 22 and a respective aperture of the two opposite apertures.

In particular, the inner diameter of each tubular section is such that a corresponding portion of the pipettor 22 can fit (e.g. snug fit) inside the tubular section. Accordingly, if the diameter of the pipettor 22 varies, the inner diameter of each tubular section may vary across the length of the tubular section. Furthermore, each tubular section has a portion with an outer diameter corresponding to the diameter of its respective aperture and a portion with an outer diameter larger than the diameter of the respective aperture, so as to fix the pipettor 22. In order to further securely fasten the pipettor 22, a nut may be used on one side of the upper tubular section, with the pipettor 22 itself acting as a bolt.

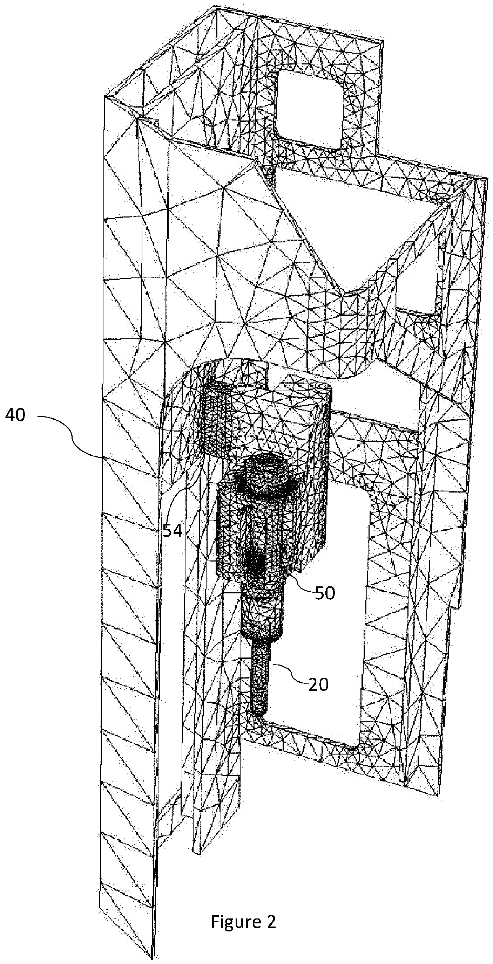

The body 52 is further coupled to a frame 40 (see **Figure 2**) by the second joining element 56, so that the body 52 and the frame 40 are not in direct contact with each other. The second joining element 56 is made of a second insulating material (e.g. polypropylene) and may substantially have the shape of a rectangular cuboid having approximate dimensions 0.5 cm x 0.75 cm x 3 cm (thickness x width x length) and a capacitance of about 13 pF. In particular, the thickness may be the separation between the body 52 and the frame 40.

The second joining element 56 may comprise two sets of holes, wherein one set is configured to receive at least one protrusion of the body 52 and the other set is configured to receive at least one fastening element for affixing the second joining element 56 to the frame 40. For instance, there may be two holes for receiving two corresponding protrusions of the body 52 and two holes for receiving two fastening elements. The fastening elements may be conductive or insulating.

The frame 40, as shown in Figure 2, is a structure that supports the dispensing component 20. The frame is at a reference potential, e.g. the Earth potential. The frame is made of conductive material and it has a shape determined by functional and structural constraints. For example, the device may be an aliquoter module in an automated laboratory system, the aliquoter module having a housing, and the frame may be the interface between the dispensing component 20 and the housing. In particular, the frame 40 may connect the connecting component 50 and the dispensing component 20 to an X-Y table as well as to a Z-axis linear actuator.

Indeed, the dispensing component 20, together with the connecting component 50 and the frame 40, is movable with respect to a sample container 60 containing a liquid sample 65, as shown in **Figure 3.** For example, the dispensing component 20 may be moved downwards towards the sample container 60 before drawing or dispensing the liquid and may be moved upwards away from the sample container 60 the liquid has been drawn or dispensed.

The device 100 of Figure 3 shows the pipette tip 24 mounted to the pipettor 22. The pipette tip 24 is shown as containing an aliquot and aerosol above the aliquot, wherein the aerosol is stopped from going up in the pipettor shaft by a filter. The sample container 60 is accommodated in a carrier or puck 70 that may move the sample container 60 along the tracks of the ALS.

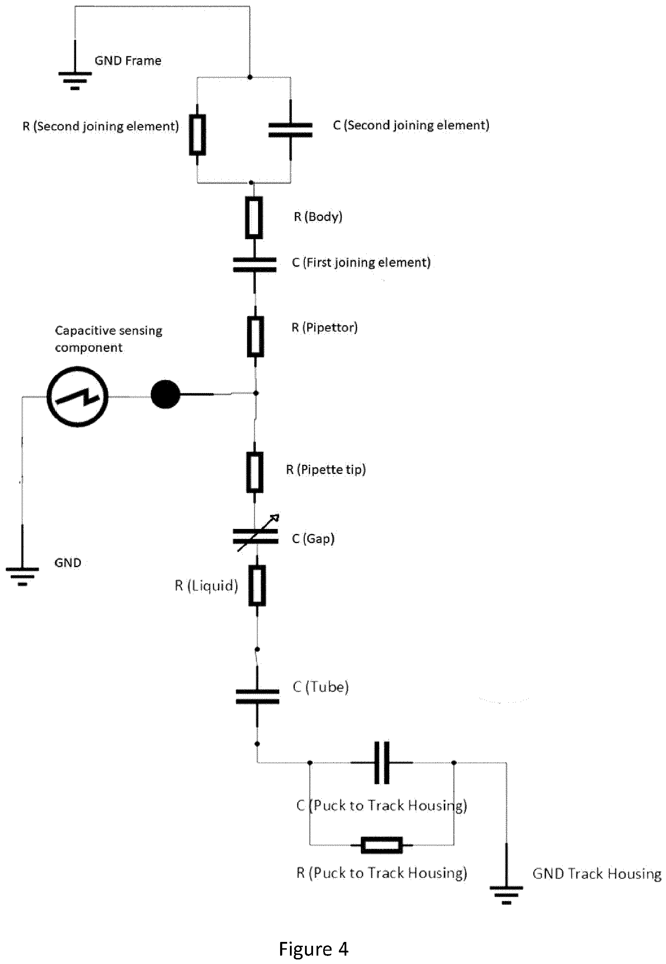

**Figure 4** shows the equivalent electrical circuit corresponding to Figure 3. It can be seen that the capacitive sensing component 30 is configured to measure a state-dependent capacitance value given by the variable capacitance of the gap between the pipette tip and the liquid level ($C_{gap}$), the capacitance of the liquid sample together with the sample container ($C_{tube}$) and the capacitance of the puck plus track ($C_{puck}$). Since they are in series with one another, the state-dependent capacitance value is given by:

$$C_{sd} = \frac{1}{\frac{1}{C_{gap}} + \frac{1}{C_{tube}} + \frac{1}{C_{puck}}}$$

The branch of the circuit from the connecting point of the capacitive sensing component 30 to the grounded frame 40 contributes, instead, a parasitic capacitance value

$$C_{par} = \frac{1}{\frac{1}{C_{fje}} + \frac{1}{C_{sje}}}$$

wherein $C_{fje}$ is the capacitance of the first joining element 54, $C_{sje}$ is the capacitance of the second joining element 56 and $C_{par}$ is the overall capacitance of the connecting component 50.

Accordingly, the total capacitance measured by the capacitive sensing component 30 of the adapted device 100 is

$$C^A = \frac{1}{\frac{1}{C_{fje}} + \frac{1}{C_{sje}}} + \frac{1}{\frac{1}{C_{gap}} + \frac{1}{C_{tube}} + \frac{1}{C_{puck}}}$$

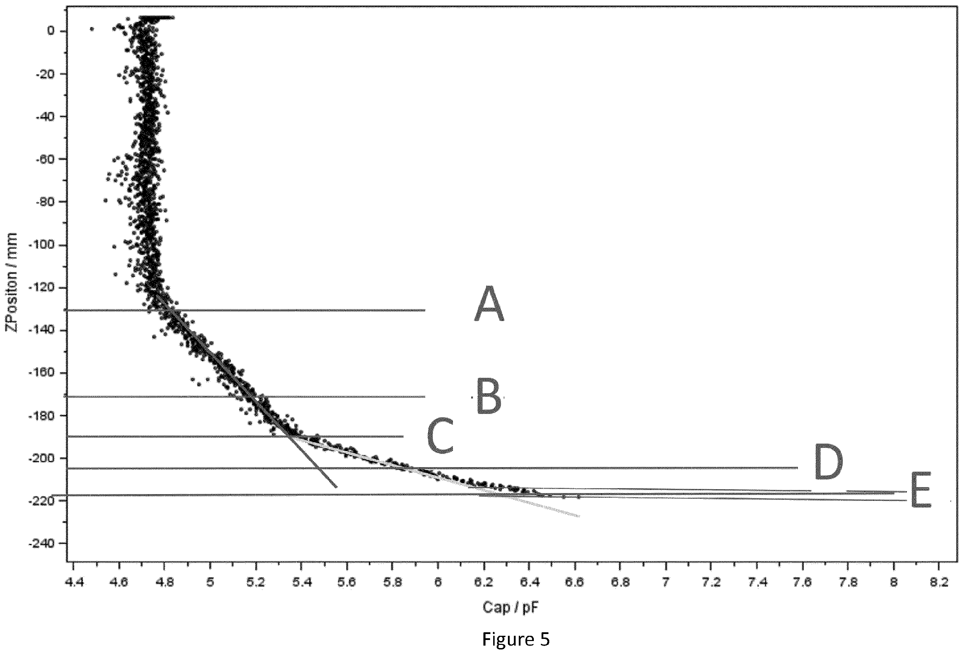

For a given device 100 and a given sample container 60, the only variable contribution is $C_{gap}$, which depends on the operational state of the dispensing component 20. Figures 5 to 8 show how different factors affect $C_{gap}$.

**Figure 5** shows how the measured capacitance, which includes $C_{gap}$, varies with the distance between the (head of the) pipette tip 24 and other entities while the pipette tip 24 moves along the vertical axis. The "origin position" on the vertical axis corresponds to the idle position of the dispensing component 20. Five particular positions of the pipette tip 24 are marked on the plot of Figure 5 with corresponding letters A to E.

At position A, about 130 mm below the origin position, the pipette tip 24 may encounter a cover for a barcode reader of the device. As used herein, "encounter" means that the pipette tip 24 comes to be at the same vertical level of the other entity (such as the cover). For example, an upper edge of the cover may be at about 130 mm below the origin position and the cover may be horizontally displaced with respect to the vertical axis along which the dispensing component 20 moves, e.g. by about 8 cm.

At position B, about 170 mm below the origin position, the pipette tip 24 may encounter the tube, in particular the upper edge of the tube. At position C, about 190 mm below the origin position, the pipette tip 24 may encounter an upper edge of a clamp holding the tube and at position D, about 205 mm below the origin position, the pipette tip 24 may encounter the lower edge of the clamp. Finally, at position E the pipette tip 24 may encounter the meniscus of the liquid sample 65.

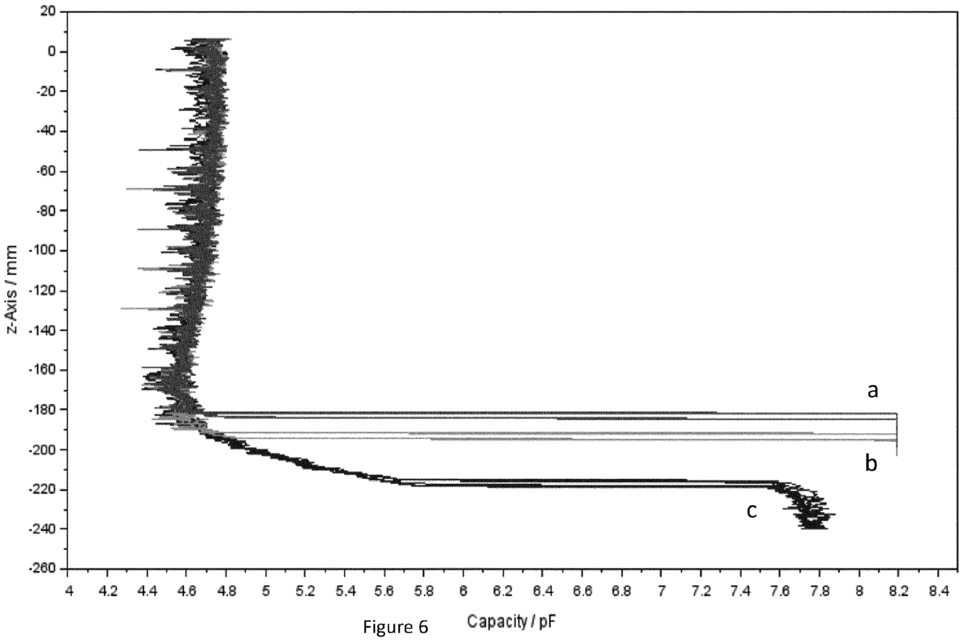

**Figure 6** shows how the measured capacitance, which includes $C_{gap}$, varies depending on features of the environment of the dispensing component 20, specifically the relative position between the meniscus and the clamp. Curve (a) shows a case in which the meniscus is above the upper edge of the clamp, curve (b) shows a case in which the meniscus is between the upper edge and lower edge of the clamp and curve (c) shows a case in which the meniscus is below the lower edge of the clamp.

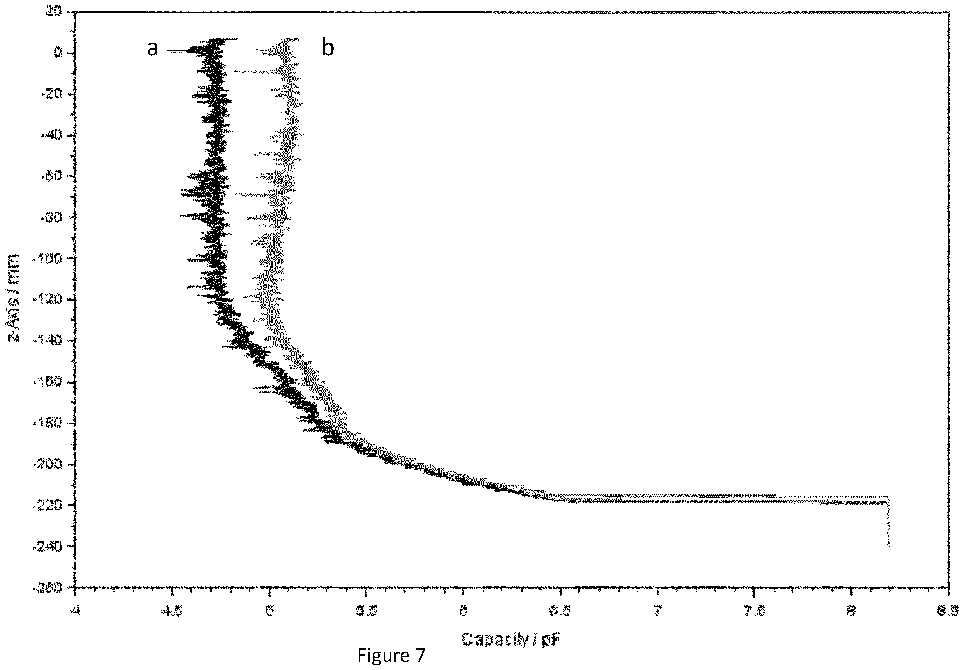

**Figure 7** shows how the measured capacitance, which includes $C_{gap}$, varies depending on features of the environment of the dispensing component 20, specifically the presence of a device door. The device door may have an extension along the vertical axis that covers the distance between the origin position and the tube bottom. Curve (a) shows a case in which the device door is present while curve (b) shows a case in which the device door is absent.

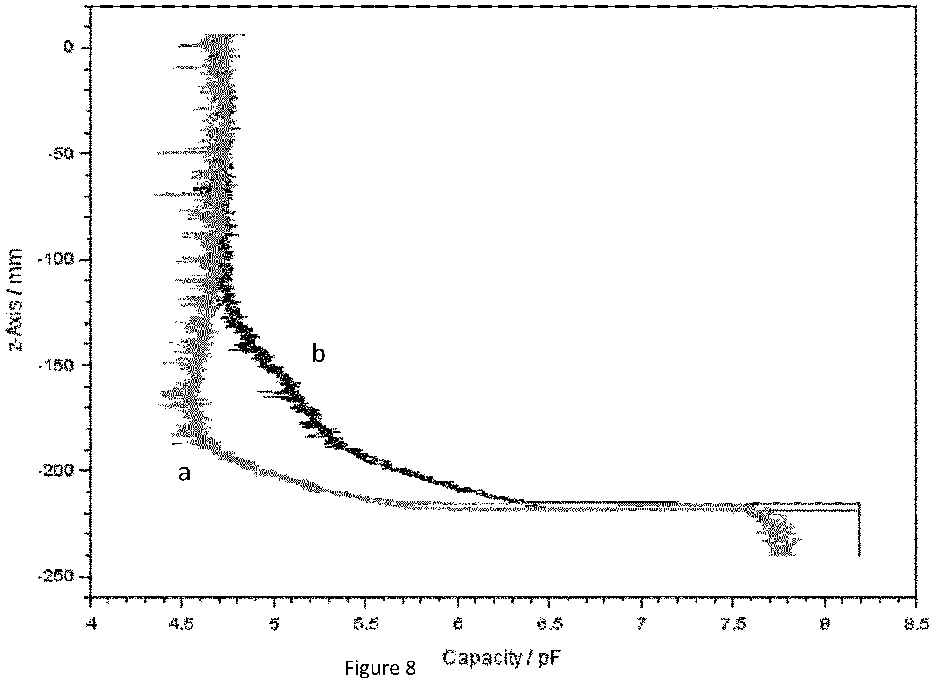

**Figure 8** shows how the measured capacitance, which includes $C_{gap}$, varies depending on features of the environment of the dispensing component 20, specifically the presence of a cover for a barcode reader. The cover may have an extension along the vertical axis that ranges from about 100 mm below the origin position to the tube bottom. Curve (a) shows a case in which the cover is absent while curve (b) shows a case in which the cover is present.

The curves shown in Figures 5 to 8 are calibration curves and show that absolute values of the capacitance (as opposed to just relative changes thereof) can provide useful information for determining operational states of the dispensing component 20, including a position relative to the meniscus and the presence/absence/position of other entities, which provide the possibility of checking whether the configuration of the device is correct.

Although the numerical values of the capacitance shown in Figures 5 to 8 have been obtained using a non-adapted device, the same principles of calibration/detection discussed with reference to these figures apply to the adapted device 100.

The non-adapted device is equal to the device 100 except for the presence of the second joining element 56. Accordingly, the measured capacitance in this case is

$$C^{NA} = C_{fje} + \cfrac{1}{\cfrac{1}{C_{gap}} + \cfrac{1}{C_{tube}} + \cfrac{1}{C_{puck}}}$$

It can be seen that there cases in which $C^{NA}$ saturates, as for example in Figures 6 (curves a and b), Figure 7 and Figure 8 (curve b). The capacitance axis of Figures 5 to 8 has an offset of 17 pF, so that e.g. the actual capacitance values in Figures 6 to 8 are between 21 pF and 25.5 pF. In the illustrative example mentioned above, the capacitive sensing range has 25 pF as upper limit, and, thus, any value above that saturates.

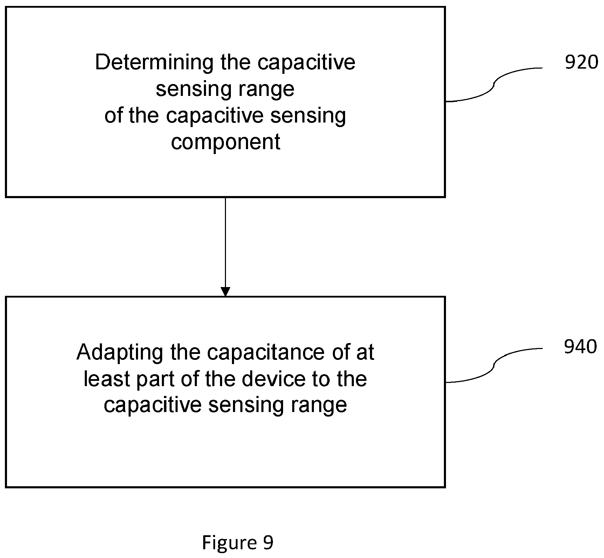

An exemplary method for improving such an existing non-adapted device is shown in **Figure 9.** The method comprises determining, at 920, the capacitive sensing range of the capacitive sensing component 30 and adapting, at 940, the capacitance of at least part of the device to the capacitive sensing range 30 such that each capacitance value of the plurality of capacitance values is within the capacitive sensing range. In particular, the method comprises adapting the capacitance of the connecting component 50 to the capacitive sensing range 30 such that each capacitance value of the plurality of capacitance values is within the capacitive sensing range.

This step of adapting comprises a step of numerically calculating (using a computational FEM) $C_{par}$, i.e. the capacitance of the connecting component 50 in the original, non-adapted configuration, in which $C_{par} = C_{fje}$. Then a desired corrective value $\Delta C$ is set by simulating $C^{NA}$ for an operational state with relatively high capacitance, e.g. when the pipette tip is at the liquid meniscus/inside the liquid sample.

The second joining element 56 may then be introduced in the simulation of the connecting component 50 and the parameters of the second joining element 56, such as material and size, are varied until the desired $\Delta C$ is achieved. In the illustrative example, it may be determined that the second joining element 56 should have a capacitance of about 13 pF and, to that aim, it should have approximate dimensions of 0.5 cm x 0.75 cm x 3 cm and be made of polypropylene.

A second joining element 56 according to the parameters determined by the simulation is then obtained (e.g. manufactured) and introduced in the device between the body 52 and the frame 40, thereby creating the adapted device 100.

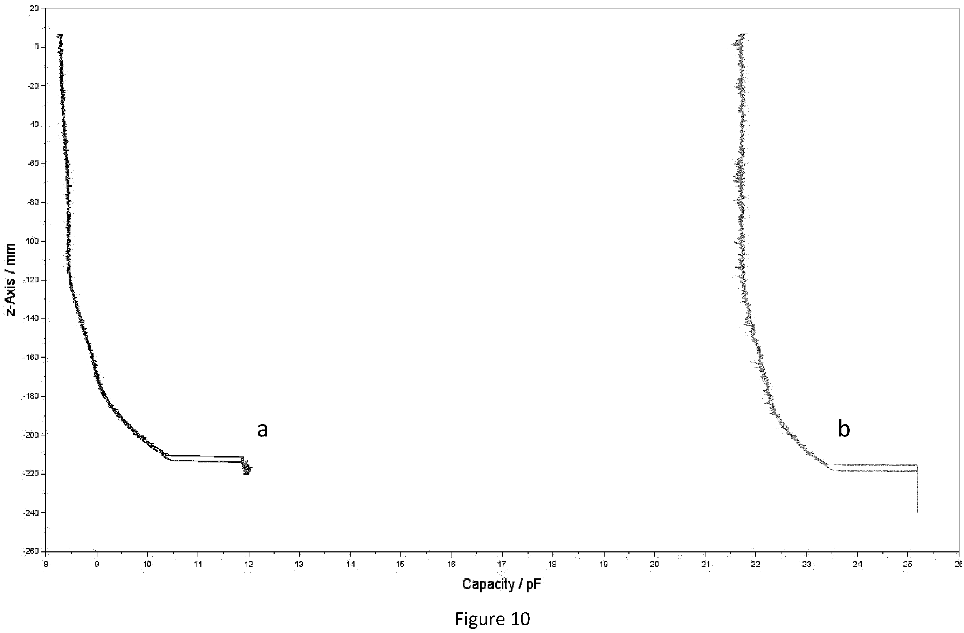

**Figure 10** shows how the capacitance values are shifted when an adapted device 100 is used (curve a) with respect to when a non-adapted device 100 is used (curve b). It is apparent that curve (b) has a saturation, i.e. values above the upper limit of 25 pF, while curve (a) shows no saturation, since the higher values of the curve have been shifted to about 12 pF. Accordingly, the adapted device 100 provides an accurate and reliable capacitive sensing.

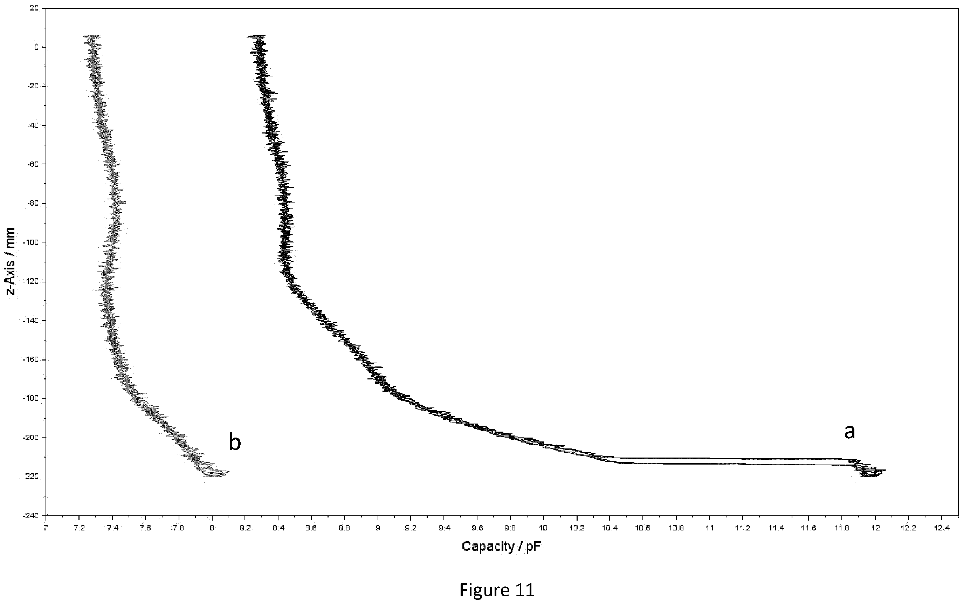

Another example of calibration curves similar to those of Figures 5 to 8 but obtained with the adapted device 100 is given in **Figure 11,** which shows how the measured capacitance is affected by the presence of the pipette tip. Curve (a) is the same as curve (a) of Figure 10, while curve (b) shows the capacitance values when the pipette tip 24 is not mounted to the pipettor 22.

**Claims**

1. A device comprising:

   a dispensing component configured to draw and dispense liquid, wherein the dispensing component is movable with respect to a liquid sample; and
   a capacitive sensing component coupled to the dispensing component and configured to detect a plurality of operational states of the dispensing component, wherein each operational state of the plurality of operational states corresponds to a respective capacitance value of a plurality of capacitance values;
   wherein:

      the capacitive sensing component has a capacitive sensing range, wherein the capacitive sensing range is a predefined working range for the capacitive sensing component; and
      the capacitance of at least part of the device is adapted to the capacitive sensing range such that each capacitance value of the plurality of capacitance values is within the capacitive sensing range.

2. The device according to claim 1, wherein the plurality of operational states comprises a plurality of positions of the dispensing component along a vertical axis relative to the meniscus of the liquid sample, the plurality of positions including:

   a first position in which the distance between the dispensing component and the meniscus is greater than a threshold, wherein the threshold is between about 1 mm and about 7 mm,
   a second position in which the dispensing component is in contact with the liquid sample.

3. The device according to claim 2, wherein the plurality of positions further includes:
   a third position in which the distance between the dispensing component and the meniscus is greater than about 0 mm and less than the threshold.

4. The device according to any one of claims 1 to 3 further comprising:

   a frame at a reference potential;
   a connecting component mechanically coupling the dispensing component to the frame, wherein the connecting component comprises a body;
   wherein the at least part of the device with capacitance adapted to the capacitive sensing range comprises the connecting component.

5. The device according to claim 4, wherein:

   the connecting component further comprises a first joining element and a second joining element, wherein the first joining element couples the body to the dispensing component and the second joining element couples the body to the frame;
   the first joining element is made of a first insulating material; and
   the second joining element is made of a second insulating material.

6. The device according to claim 5, wherein:

the composition of the first insulating material and/or of the second insulating material is such that the capacitance of the connecting component is adapted to the capacitive sensing range; and/or
the size of the first joining element and/or the size of the second joining element is such that the capacitance of the connecting component is adapted to the capacitive sensing range.

7. The device according to any one of claims 4 to 6, wherein:
the shape of the body is such that the capacitance of the connecting component is adapted to the capacitive sensing range.

8. The device according to any one of the preceding claims further comprising a corrective electrical circuit comprising one or more electrical components, wherein the at least part of the device with capacitance adapted to the capacitive sensing range comprises the corrective electrical circuit and wherein the one or more electrical components are configured such that the capacitance of the at least part of the device is adapted to the capacitive sensing range.

9. The device according to any one of the preceding claims, wherein:

each capacitance value of the plurality of capacitance values is composed of a state-dependent capacitance value and a parasitic capacitance value; and
the capacitance of at least part of the device is adapted to the capacitive sensing range in that the parasitic capacitance value is adapted.

10. A connecting component configured to couple a dispensing component to a frame at a reference potential, wherein:

the dispensing component is configured to draw and dispense liquid and is coupled to a capacitive sensing component;
the capacitive sensing component is configured to detect a plurality of operational states of the dispensing component, wherein each operational state of the plurality of operational states corresponds to a respective capacitance value of a plurality of capacitance values;
the capacitive sensing component has a capacitive sensing range, wherein the capacitive sensing range is a predefined working range for the capacitive sensing component; and
the capacitance of the connecting component is adapted to the capacitive sensing range such that each capacitance value of the plurality of capacitance values is within the capacitive sensing range.

11. A method for providing a device according to any one of claims 1 to 9, the method comprising:

determining the capacitive sensing range of the capacitive sensing component, wherein the capacitive sensing range is a predefined working range for the capacitive sensing component; and
adapting the capacitance of at least part of the device to the capacitive sensing range such that each capacitance value of the plurality of capacitance values is within the capacitive sensing range.

12. The method according to claim 11, wherein adapting the capacitance of at least part of the device to the capacitive sensing range comprises:

coupling the dispensing component to a frame of the device, wherein the frame is at a reference potential, by means of a connecting component comprising a body;
adapting the capacitance of the connecting component to the capacitive sensing range.

13. The method according to claim 12, wherein adapting the capacitance of the connecting component to the capacitive sensing range comprises:
providing the connecting component such that it further comprises a first joining element and a second joining element, wherein:

the first joining element couples the body to the dispensing component and the second joining element couples the body to the frame;
the first joining element is made of a first insulating material; and
the second joining element is made of a second insulating material.

14. The method according to claim 12 or 13 wherein adapting the capacitance of the connecting component to the capacitive sensing range further comprising selecting the shape of the body such that the capacitance of the connecting component is adapted to the capacitive sensing range.

15. A method for using the device of any one of claims 1 to 9, the method comprising:

moving the dispensing component towards the liquid sample;
detecting, by the capacitive sensing component, when the dispensing component crosses the meniscus of the liquid sample;
in response to detecting that the dispensing component has crossed the meniscus of the liquid sample:

drawing, by the dispensing component, an aliquot from the liquid sample; or
dispensing, by the dispensing component, an aliquot to the liquid sample; moving the dispensing component away from the liquid sample.

Capacitive sensing
component

Figure 1

Figure 2

Figure 3

Figure 4

Figure 5

Figure 6

Figure 7

Figure 8

```
┌─────────────────────────────┐
│                             │
│   Determining the capacitive│ ⌐── 920
│        sensing range        │
│   of the capacitive sensing │
│          component          │
│                             │
└─────────────────────────────┘
              │
              ▼
┌─────────────────────────────┐
│                             │
│   Adapting the capacitance  │
│   of at least part of the   │ ⌐── 940
│      device to the          │
│    capacitive sensing range │
│                             │
└─────────────────────────────┘
```

Figure 9

Figure 10

Figure 11

Europäisches
Patentamt

European
Patent Office

Office européen
des brevets

## EUROPEAN SEARCH REPORT

Application Number

EP 22 18 8252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/211915 A1 (SCARLETT JAMES E [US] ET AL) 30 July 2015 (2015-07-30)<br>* paragraph [0060] – paragraph [0061] *<br>* paragraph [0045] *<br>* paragraph [0069] – paragraph [0071] *<br>* paragraph [0074] – paragraph [0080] * | 1-15 | INV.<br>G01N35/10 |
| X | US 2015/292933 A1 (WIGGLI MARKUS [CH] ET AL) 15 October 2015 (2015-10-15)<br>* paragraph [0151] – paragraph [0152] *<br>* paragraph [0136] *<br>* paragraph [0132] – paragraph [0134] * | 1-15 | |
| X | US 2016/097668 A1 (VILAG BRIAN VINCENT [US] ET AL) 7 April 2016 (2016-04-07)<br>* paragraph [0074] *<br>* paragraph [0073] *<br>* paragraph [0075] * | 1-15 | |
| Y | US 2001/027269 A1 (TANAKA YOUSUKE [JP]) 4 October 2001 (2001-10-04)<br>* paragraph [0054] – paragraph [0057] * | 4-7, 12-14 | TECHNICAL FIELDS SEARCHED (IPC)<br><br>G01N |
| Y | US 2015/276772 A1 (DOCKRILL MARK BRIAN [AU] ET AL) 1 October 2015 (2015-10-01)<br>* paragraph [0074] – paragraph [0075] *<br>* paragraph [0018] – paragraph [0019] * | 4-7, 12-14 | |
| A | US 2017/135530 A1 (MACLEOD WILLIAM [GB] ET AL) 18 May 2017 (2017-05-18)<br>* paragraph [0012] – paragraph [0013] *<br>* paragraph [0014] *<br>* paragraph [0052] *<br>* paragraph [0055] * | 1-15 | |

The present search report has been drawn up for all claims

| Place of search | Date of completion of the search | Examiner |
|---|---|---|
| The Hague | 9 January 2023 | Cantalapiedra, Igor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 317 989 A1

## ANNEX TO THE EUROPEAN SEARCH REPORT
## ON EUROPEAN PATENT APPLICATION NO.

EP 22 18 8252

09-01-2023

| Patent document cited in search report | | Publication date | Patent family member(s) | | Publication date |
|---|---|---|---|---|---|
| US 2015211915 | A1 | 30-07-2015 | CN | 105917199 A | 31-08-2016 |
| | | | DE | 112015000536 T5 | 06-10-2016 |
| | | | JP | 6352431 B2 | 04-07-2018 |
| | | | JP | 2017504806 A | 09-02-2017 |
| | | | US | 2015211915 A1 | 30-07-2015 |
| | | | WO | 2015113827 A1 | 06-08-2015 |
| US 2015292933 | A1 | 15-10-2015 | CH | 709489 A2 | 15-10-2015 |
| | | | CN | 104977062 A | 14-10-2015 |
| | | | EP | 2933613 A1 | 21-10-2015 |
| | | | JP | 6654358 B2 | 26-02-2020 |
| | | | JP | 2015203699 A | 16-11-2015 |
| | | | US | 2015292933 A1 | 15-10-2015 |
| | | | US | 2019049283 A1 | 14-02-2019 |
| US 2016097668 | A1 | 07-04-2016 | US | 2016097668 A1 | 07-04-2016 |
| | | | WO | 2016053409 A1 | 07-04-2016 |
| US 2001027269 | A1 | 04-10-2001 | NONE | | |
| US 2015276772 | A1 | 01-10-2015 | AU | 2013337608 A1 | 21-05-2015 |
| | | | CN | 104884932 A | 02-09-2015 |
| | | | CN | 110243653 A | 17-09-2019 |
| | | | EP | 2914950 A1 | 09-09-2015 |
| | | | JP | 6346191 B2 | 20-06-2018 |
| | | | JP | 2015533418 A | 24-11-2015 |
| | | | US | 2015276772 A1 | 01-10-2015 |
| | | | WO | 2014066947 A1 | 08-05-2014 |
| US 2017135530 | A1 | 18-05-2017 | EP | 3377863 A1 | 26-09-2018 |
| | | | US | 2017135530 A1 | 18-05-2017 |
| | | | WO | 2017085441 A1 | 26-05-2017 |

EPO FORM P0459